# EUROPÄISCHE PATENTSCHRIFT

(11) **EP 2 025 540 B1**
(45) Veröffentlichungstag und Bekanntmachung des Hinweises auf die Patenterteilung: **25.01.2012**
(21) Anmeldenummer: 08011859.9
(22) Anmeldetag: 01.07.2008
(51) Int. Cl.: B60H 1/22

(54) **Verfahren zum Betreiben eines brennstoffbetriebenen Heizgeräts**
Method for operating a fuel driven heating device
Procédé de fonctionnement d'un appareil de chauffage combustible

(30) Priorität: 16.08.2007 DE 102007038705
(43) Veröffentlichungstag der Anmeldung: 18.02.2009
(73) Patentinhaber: J. Eberspächer GmbH & Co. KG, 73730 Esslingen (DE)
(72) Erfinder: Kennerknecht, Klaus, 73732 Esslingen (DE); Epple, Jürgen, 72135 Dettenhausen (DE); Burner, Erwin, 73099 Adelberg (DE)
(74) Vertreter: Ruttensperger, Bernhard

(56) Entgegenhaltungen:
- EP-A- 1 752 323
- DE-A1- 10 005 376
- DE-A1- 19 924 329

## Beschreibung

Die vorliegende Erfindung betrifft ein Verfahren zum Betreiben eines brennstoffbetriebenen Heizgeräts, insbesondere Fahrzeugheizgerät, in einer Startphase der Verbrennung, wobei das Heizgerät eine Brennkammerbaugruppe aufweist, in welche vermittels einer Verbrennungsluftzuführanordnung Verbrennungsluft und vermittels einer Brennstoffzuführanordnung Brennstoff eingeleitet werden, wobei die Brennkammerbaugruppe wenigstens zwei elektrisch erregbare Heizorgane aufweist.

Bei einem derartigen Heizgerät mit einer wenigstens zwei insbesondere in der Startphase gleichzeitig erregbaren Zündorganen wird es, ausreichende elektrische Energie zum Erregen derselben vorausgesetzt, möglich, schneller Zündbedingungen zu schaffen, also ausreichend hohe Temperaturen, um das vorhandene Gemisch aus Luft und Brennstoff zur Verbrennung zu bringen. Auch kann eine bessere Verteilung dieser Zündbedingungen über die Brennkammerbaugruppe bzw. eine Brennkammer derselben erhalten werden. Grundsätzlich kann jedoch ein Zustand auftreten, in welchem beispielsweise aufgrund einer Überlastung des Bordspannungssystems die verfügbare elektrische Spannung gegenüber einer normalerweise vorhandenen Betriebsspannung so stark gesenkt ist, dass aufgrund einer mangelnden Versorgung der zwei oder mehreren Heizorgane mit elektrischer Energie die Erzeugung der Zündbedingungen nicht sichergestellt ist.

Aus der EP 1 752 323 A1 ist ein Fahrzeugheizsystem bekannt, bei welchem in einer Umfangswandung eines Brennkammergehäuses zwei Ansätze zum Aufnehmen jeweils eines Zündorgans vorgesehen sind. In einer Startphase dieses bekannten Heizgeräts können beide Ansätze, die auch mit porösem Verdampfermedium ausgekleidet sind, mit Brennstoff gespeist werden, oder es kann auch nur einer der Ansätze gespeist werden. Auf diese Art und Weise kann beispielsweise bei sehr niedrigen Umgebungstemperaturen Brennstoff zu beiden Ansätzen geleitet werden, so dass in der Startphase durch entsprechende Erregung beider Zündorgane dann auch die Verbrennung ausgehend von beiden Ansätzen gestartet wird.

Es ist daher die Aufgabe der vorliegenden Ereindung, ein Verfahren zum Betreiben eines brennstoffbetriebenen Heizgeräts, insbesondere Fahrzeugheizgerät, vorzusehen, mit welchem bei beeinträchtigter Versorgung mit elektrischer Energie die Erzeugung von Zündbedingungen sichergestellt werden kann bzw. eine Belastung eines Bordspannungssystems so weit als möglich reduziert werden kann.

Gemäß der Erfindung wird diese Aufgabe gelöst durch ein Verfahren zum Betreiben eines brennstoffbetriebenen Heizgeräts, insbesondere Fahrzeugheizgerät, in einer Startphase der Verbrennung, wobei das Heizgerät eine Brennkammerbaugruppe aufweist, in welche vermittels einer Verbrennungsluftzuführanordnung Verbrennungsluft und vermittels einer Brennstoffzuführanordnung Brennstoff eingeleitet werden, wobei die Brennkammerbaugruppe wenigstens zwei elektrisch erregbare Heizorgane aufweist, bei welchem Verfahren in der Startphase der Verbrennung dann, wenn eine geringere Anzahl an Heizorganen, vorzugsweise nur eines der Heizorgane, zur Erzeugung von Zündbedingungen zu nutzen ist, mit einer anderen Startprozedur gestartet wird, als dann, wenn eine größere Anzahl an Heizorganen zur Erzeugung von Zündbedingungen zu nutzen ist.

Bei dieser erfindungsgemäßen Vorgehensweise wird also unterschieden zwischen Zuständen, in welchen nur eines der Heizorgane nutzbar ist oder genutzt werden soll, und Zuständen, in welchen mehrere, beispielsweise zwei Heizorgane, zur Verfügung stehen bzw. auch einzusetzen sind. Je nachdem, in welchem Zustand das System sich befindet, wird eine an die Anzahl der tatsächlich zur Erzeugung der Zündbedingungen dann eingesetzten Heizorgane angepasste Startprozedur gewählt, so dass unabhängig von der Anzahl der aktivierten oder aktivierbaren Heizorgane eine Zündung sichergestellt werden kann.

Bei dem erfindungsgemäßen Verfahren ist vorgesehen, dass eine geringere Anzahl von Heizorganen zur Erzeugung von Zündbedingungen zu nutzen ist, wenn:
die Temperatur des Fahrzeugheizgeräts oder in der Umgebung des Fahrzeugheizgeräts unter einer vorbestimmten Grenztemperatur liegt.

Beispielsweise kann bei dem erfindungsgemäßen Verfahren vorgesehen sein, dass eine geringere Anzahl von Heizorganen zur Erzeugung von Zündbedingungen ferner dann nutzen ist, also entweder nutzbar ist oder genutzt werden soll, wenn:
A) weitere Zündorgane auf Grund eines Defekts nicht erregbar sind, oder/und
B) die verfügbare elektrische Spannung unter einer vorbestimmten Grenzspannung liegt,
   oder/und
D) der in die Brennkammerbaugruppe eingespeiste Brennstoff einer Brennstoffklasse angehört, die als leicht entzündbar oder/und leicht verdampfend klassifiziert ist.

Während die Bedingungen A) und B) System-Bedingungen sind, also Bedingungen, die hinsichtlich der Anzahl an in der Startphase zu nutzenden Heizorgane praktisch keine Auswahl lassen, da z. B. tatsächlich nur eines betriebsbereit ist oder die elektrische Spannung tatsächlich nur zum Erregen eines Zündorgans ausreicht, um dort die Zündbedingungen zu generieren, sind die Bedingungen C) und D) nicht systembedingt, sondern betriebsbedingt, erlauben also die Auswahl einer Startprozedur mit einer verringerten Anzahl an Heizorganen, obgleich mehrere oder mehr als nur ein Heizorgan betreibbar wären bzw. betrieben werden könnten. In jedem Falle wird jedoch dafür gesorgt, dass die verfügbare elektrische Energie so konzentriert wird, dass eine Zündung sichergestellt ist bzw. durch Verringerung der Anzahl an tatsächlich eingesetzten Verbrauchern elektrischer Energie eine möglichst geringe Belastung des Bordspannungssystems, also beispielsweise auch einer Batterie eines Fahrzeugs, erhalten wird.

Die Startprozedur bei Nutzung einer geringeren Anzahl an Heizorganen kann sich von einer Startprozedur bei Nutzung größerer Anzahl an Heizorganen dadurch unterscheiden, dass
a) wenigstens ein zu nutzendes Heizorgan mit höherer Heizleistung betrieben wird,
   oder/und
b) die Erhöhung einer Verbrennungsluftzuführmenge über einen längeren Zeitraum gestreckt wird,
   oder/und
c) die Erhöhung einer Brennstoffzuführmenge über einen längeren Zeitraum gestreckt wird,
   oder/und
d) der Beginn der Brennstoffzufuhr bezogen auf den Beginn der Erregung des Heizorgans später erfolgt,
   oder/und
e) das Verbrennungsluft/Brennstoff-Gemisch mit einem geringeren Verbrennungsluft/Brennstoff-Verhältnis bereitgestellt wird.

Wenigstens eines der Heizorgane kann ein Zündelement, beispielsweise ein Glühzündelement, wie z. B. ein Glühzündstift, sein. Weiterhin kann wenigstens eines der Heizorgane ein die Brennstoffabdampfung unterstützendes Heizelement, beispielsweise an einem Bodenbereich der Brennkammerbaugruppe, sein.

Allgemein erkennt man also, dass gemäß der vorliegenden Erfindung dann, wenn Bedingungen vorherrschen, die auch bei Einsatz von nur einem oder wenigen Heizorganen eine schnelle und zuverlässige Zündung zulassen, auf das Erregen mehrerer tatsächlich verfügbarer und betreibbarer Heizorgane verzichtet wird, was zu einer Entlastung des Bordspannungssystems führt. Durch das Erregen jeweils nur eines Heizorgans dann, wenn die Bedingungen dies zulassen, können die Heizorgane grundsätzlich entlastet und mithin ihre Betriebslebensdauer verlängert werden.

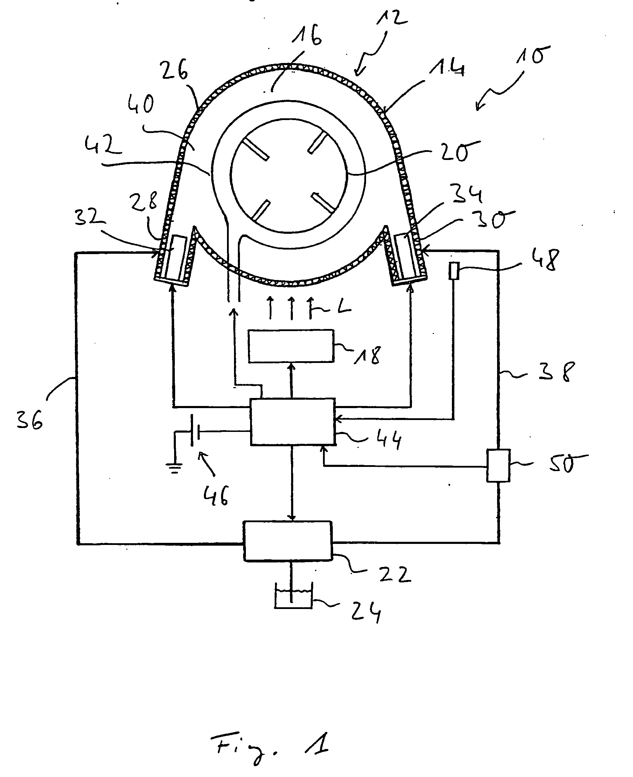

Die vorliegende Erfindung wird nachfolgend mit Bezug auf die beiliegende Fig. 1 detailliert beschrieben, welche einen prinzipartigen Aufbau eines mit der erfindungsgemäßen Vorgehensweise betreibbaren Heizgeräts zeigt.

In der Fig. 1 ist ein brennstoffbetriebenes Fahrzeugheizgerät allgemein mit 10 bezeichnet. Das Fahrzeugheizgerät 10 umfasst eine Brennkammerbaugruppe 12, die in der Darstellung der Fig. 1 in axialer Ansicht bzw. im axialen Querschnitt gezeigt ist. In einem Brennkammergehäuse 14 der Brennkammerbaugruppe 12 ist eine Brennkammer 16 ausgebildet, in welche über eine schematisch dargestellte Verbrennungsluftzuführanordnung 18, beispielsweise über einen zentralen Lufteinlassstutzen 20, Verbrennungsluft eingespeist wird. Durch eine Brennstoffzuführanordnung 22 wird flüssiger Brennstoff aus einem Reservoir 24 in die Brennkammer 16 dadurch eingespeist, dass ein beispielsweise eine Umfangswandung auskleidendes poröses Verdampfermedium 26 mit dem flüssigen Brennstoff getränkt wird, diesen in seinem Innenvolumenbereich durch Kapillarförderwirkung verteilt und dann in Richtung zur Brennkammer 16 hin abdampft.

An einer Umfangswandung des Brennkammergehäuses 14 sind zwei Ansätze 28, 30 vorgesehen, in welchen jeweils ein Zündelement 32, 34, beispielsweise Glühzündstift, aufgenommen ist. Auch diese Ansätze 28, 30 sind innen zumindest teilweise mit porösem Verdampfermedium ausgekleidet, welches in Verbindung steht mit dem die Brennkammer 16 umgebenden porösen Verdampfermedium 26.

In die Ansätze 28, 30 führen Brennstoffzuführleitungen 36, 38, um den Brennstoff primär dort in die Brennkammer 16 einzuspeisen, wo in der Startphase der Verbrennung ein zündfähiges Gemisch aus Verbrennungsluft L und Brennstoff bereitgestellt werden muss, also im Innenvolumenbereich der Ansätze 28, 30, wo auch die die zum Zünden erforderlichen Temperatur erzeugenden Zündelemente 32, 34 vorhanden sind.

In einem Bodenbereich 40 des Brennkammergehäuses 14 kann eine elektrisch erregbare Heizeinrichtung 42, beispielsweise in Form einer Heizwendel, Heizspirale oder einem sonstwie verlaufendem Heizleiter vorgesehen sein. Durch elektrische Erregung dieser Heizeinrichtung 42 kann insbesondere die Brennstoffabdampfung unterstützt werden, so dass vor allem bei vergleichsweise niedrigen Umgebungstemperaturen die Erzeugung vom Brennstoffdampf insbesondere in der Startphase unterstützt werden kann.

Die verschiedenen elektrisch erregbaren Systembereiche des Fahrzeugheizgeräts 10 stehen unter der Ansteuerung einer Ansteuervorrichtung 44. Diese gibt Ansteuersignale an die Verbrennungsluftzuführanordnung 18 und die Brennstoffzuführanordnung 22 aus, um diese so zu erregen, dass die erforderliche Verbrennungsluftmenge und auch die erforderliche Brennstoffmenge in Richtung Brennkammerbaugruppe 12 gefördert werden. Auch die Zündelemente 32, 34 und die elektrisch erregbare Heizeinrichtung 42 erhalten Ansteuersignale von der Ansteuervorrichtung 44, um durch deren elektrische Erregung die vorangehend angesprochene Erwärmung zu erzeugen. Es sei hier darauf hingewiesen, dass die Zufuhr von Ansteuersignalen im Allgemeinen bedeutet, dass an die verschiedenen Systembereiche eine elektrische Spannung, entweder in kontinuierlicher oder getakteter Weise angelegt wird, um beispielsweise beruhend auf einem bestimmten Tastverhältnis im Bereich der Heizeinrichtung 42 oder der Zündelemente 32, 34 eine gewünschte elektrische Heizleistung zu erzeugen. Bei der Verbrennungsluftzuführanordnung 18 kann das Tastverhältnis so gewählt werden, dass durch die hieraus sich ergebende mittlere Spannung eine bestimmte Drehzahl eines Antriebsmotors für ein Luftförderrad erreicht wird. Bei der Brennstoffzuführanordnung 22 kann eine intermittierend arbeitende Dosierpumpe getaktet erregt werden, um mit jedem einem Takt entsprechenden Arbeitsimpuls ein definiertes Brennstoffvolumen zu fördern.

Die zum Erregen der verschiedenen Systembereiche erforderliche elektrische Energie umgreift die Ansteuervorrichtung 44 von einem schematisch dargestellten Bordspannungssystem 46 ab, das im Normalfall beispielsweise eine Spannung von 12 V oder 24 V liefert.

Der Betrieb des Fahrzeugheizgeräts 10 kann durch die Ansteuervorrichtung 44 unter Berücksichtigung verschiedener Einflussparameter erfolgen. So kann beispielsweise ein Temperatursensor 48 ein Temperatursignal liefern, welches die Temperatur der Brennkammerbaugruppe 12 bzw. im Bereich dieser Brennkammerbaugruppe wiedergibt. Auch ein die Außentemperatur erfassender, in der Figur jedoch nicht dargestellter Temperatursensor kann ein entsprechendes Signal in der Ansteuervorrichtung 44 eingeben. Weiterhin kann ein Brennstoffsensor 50 vorgesehen sein, welcher die Qualität bzw. die Zusammensetzung des in Richtung Brennkammerbaugruppe 12 gespeisten Brennstoffs erfasst bzw. ein diese Zusammensetzung repräsentierendes Signal in die Ansteuervorrichtung 44 einspeist. Auch weitere Einflussgrößen, wie z. B. der Luftdruck oder die in einem zu erwärmenden Fahrzeuginnenraum vorherrschende Temperatur können Grundlage für die Ansteuerung der verschiedenen Systembereiche sein.

Bei einem derartigen Fahrzeugheizgerät 10 wird beispielsweise im Normalfall so vorgegangen, dass in der Startphase beide Zündelemente 32, 34 und auch die elektrisch erregbare Heizeinrichtung 42 betrieben werden. Einhergehend mit der Erregung insbesondere der Zündelemente 32, 34 werden Verbrennungsluft und Brennstoff in die Brennkammer 16 eingespeist, wobei hier beispielsweise gleichlaufend mit einer Erhöhung der Heizleistung der Zündelemente 32, 34 auch mit einer vorbestimmten Rate die Brennstoffzuführmenge und die Verbrennungsluftzuführmenge erhöht werden. Durch die gleichzeitige Erregung der Heizeinrichtung 42 wird insbesondere bei niedrigen Umgebungstemperaturen die Brennstoffabdampfung unterstützt und somit das Bilden eines verbrennungsfähigen Gemisches unterstützt. Eine derartige beispielsweise beide Zündelemente 32, 34 und die Heizeinrichtung 42 nutzende Startprozedur kann zu einer sehr schnellen Zündung und Flammausbreitung führen, erfordert jedoch, dass tatsächlich alle diese elektrisch erregbaren Systembereiche ausreichend mit elektrischer Energie gespeist werden können. Ist dies nicht der Fall, kann beispielsweise das Bordspannungssystem 46 die normalerweise zur Verfügung gestellte Betriebsspannung nicht liefern, so besteht die Gefahr, dass bei gleichzeitiger Erregung mehrerer Zündelemente 32, 34 bzw. auch der Heizeinrichtung 42 zwar in all diesen Bereichen eine Erwärmung erzeugt wird, diese jedoch nicht so stark ist, dass auch unter Berücksichtigung der durch den Luftstrom bedingten Wärmeabfuhr die Zündbedingungen erzeugt werden können. In einer derartigen hinsichtlich der Versorgung mit elektrischer Energie kritischen Phase wird erfindungsgemäß dazu übergegangen, in der Startphase nur eines der Zündelemente 30, 32 zu bestromen, während das andere Zündelement deaktiviert bleibt. Auch kann auf das Erregen der Heizeinrichtung 42 verzichtet werden, so dass die gesamte verfügbare elektrische Energie im Wesentlichen auf das eine zu erregende Zündelement konzentriert werden kann. Dies bedeutet, dass die elektrische Heizleistung bzw. die in die Brennkammer 16 eingetragene elektrische Energie auf einen deutlich geringeren Volumenbereich konzentriert ist und mithin dort eine höhere Temperatur erzeugt wird, als dann, wenn eine Verteilung auf größere Volumenbereiche durch die gleichzeitige Erregung mehrerer Zündelemente bzw. auch der Heizeinrichtung 42 erfolgen würde.

Gleichzeitig mit der Entscheidung, dass nur eines der Zündelemente 32, 34 zu erregen ist, wird auch der für dieses einzige zu nutzende Zündelement dann vorgegebene Ablauf der Startprozedur angepasst. So kann dazu übergegangen werden, dieses Zündelement grundsätzlich mit höherer Heizleistung zu betreiben, als in dem Fall, in dem auch noch andere Heizorgane, also beispielsweise ein weiteres Zündelement oder/und die Heizeinrichtung 42, zu betreiben sind. Weiterhin kann vorgesehen sein, dass der zeitliche Ablauf der Startprozedur etwas gestreckt wird, also beispielsweise das allmähliche Hochfahren der Heizleistung des einzigen betriebenen Zündelements und auch das Erhöhen der Brennstoffzuführmenge und der Verbrennungsluftzuführmenge mit geringerer Rate ablaufen. Somit wird dem einzigen Heizelement mehr Zeit gegeben, die elektrische Energie einzutragen und die Temperatur im Bereich seiner Umgebung auf ein erforderliches Niveau zu bringen. Gleichzeitig wird durch das langsamere Erhöhen insbesondere der Verbrennungsluftzuführmenge dafür gesorgt, dass der Wärmeabtrag durch den auch das zu erregende Zündorgan umströmenden Luftstrom verringert wird. Weiterhin kann das Einsetzen der Brennstoffzufuhr zeitlich verzögert sein, um zunächst dafür zu sorgen, dass die Temperatur ansteigt, also auf ein vergleichsweise hohes Niveau gebracht wird, bevor bei Brennstoffeinspeisung Wärmeenergie dazu genutzt wird, den Brennstoff zu verdampfen. Grundsätzlich ist es auch möglich, das Verhältnis von Verbrennungsluft zu Brennstoff in Richtung fetteres Gemisch zu verändern, so dass durch eine dann größere eingespeiste Brennstoffmenge ein Gemisch bereitgestellt wird, das zwar hinsichtlich des in der Startphase generierten Schadstoffausstoßes nicht ganz optimal ist, gleichwohl jedoch die Zündsicherheit erhöht. Es ist darauf hinzuweisen, dass selbstverständlich all die vorangehend beschriebenen Maßnahmen einzeln oder auch in beliebiger Kombination ergriffen sein können.

Eine Unterscheidung im Ablauf der Startprozedur kann auch dann vorgenommen werden bzw. erforderlich sein, wenn sich zeigt, dass nicht alle der zum Erzeugen der Zündbedingungen an sich zu nutzenden Heizorgane, also insbesondere die Zündelemente 32, 34, betriebsfähig sind. Zeigt sich im Bereich beispielsweise eines der Zündelemente 32, 34 ein Defekt, was beispielsweise durch Überwachung des bei anlegender Spannung fließenden elektrischen Stroms erkannt werden kann, so kann ebenfalls entschieden werden, dass das nicht ausreichend oder überhaupt nicht betreibbare Zündelement nicht weiter bestomt wird und mithin die Startprozedur auf das noch verfügbare der beiden Zündelemente 32, 34 konzentriert wird. Auch dann können die vorangehend beschriebenen Anpassungsmaßnahmen bei der Abarbeitung der Startprozedur vorgenommen werden. Ist dabei jedoch die Spannungsversorgung ausreichen, so kann beispielsweise zusätzlich auch noch Heizeinrichtung 42 betrieben werden, möglicherweise mit einer Heizleistung, die im Vergleich zu der bei Einsatz von zwei Zündelementen für die Heizeinrichtung 42 vorgesehenen Heizleistung erhöht ist.

Eine Unterscheidung, ob eine Startprozedur mit Ausnutzung ailer verfügbarer Heizorgane oder nur einer reduzierten Anzahl ablaufen kann oder soll, kann auch unter Berücksichtigung der Umgebungsbedingungen erfolgen. Zeigt beispielsweise das Signal des Temperatursensors 48 an, dass im Bereich der Brennkammerbaugruppe 12 vergleichsweise hohe Temperaturen vorherrschen, so kann zur Verringerung der Belastung des Bordspannungssystems 46 eine Startprozedur lediglich unter Verwendung von nur einem der Zündorgane 32, 34 vorgenommen werden. Die Entscheidung, ob dabei zusätzlich auch die Heizeinrichtung 42 zu betreiben ist oder nicht, kann ebenfalls in Abhängigkeit von der Temperatur erfolgen. Bei ausreichend hoher Temperatur kann beispielsweise auch darauf verzichtet werden, so dass alleine das einzige ausgewählte Zündelement 32 oder 34 erregt wird. Hier kann beispielsweise ebenfalls so vorgegangen werden, dass dann mit einer angepassten Startprozedur gearbeitet wird, also eine oder mehrere der vorangehend beschriebenen Maßnahmen ergriffen werden. Da grundsätzlich jedoch in einer derartigen Phase davon auszugehen ist, dass aufgrund der für eine Zündung vorteilhaften Umgebungsbedingungen keine Probleme bei der Flammentwicklung zu erwarten sind, kann dabei auch mit der normalen für ein derartiges Zündelement vorgesehenen Startprozedur gearbeitet werden, also mit einem Ablauf, wie er auch bei Einsatz von mehreren Zündelementen gewählt wird.

Ein weiteres Entscheidungskriterium kann der in Richtung Brennkammer 16 gespeiste Brennstoff sein. Grundsätzlich können bei derartigen Fahrzeugheizgeräten 10 verschiedene Brennstoffe zum Einsatz gelangen, wie z. B. Dieselkraftstoff, welcher aus Rohöl gewonnen wird, oder so genannter Biodieselkraftstoff. Auch ein Gemisch verschiedener Kraftstoffarten kann eingesetzt werden. Derartige verschiedene Kraftstoffe oder Kraftstoffzusammensetzungen unterscheiden sich im Allgemeinen von der Zündfähigkeit bzw. Verdampfbarkeit, so dass eine Auswahl hinsichtlich des Ablaufs der Startprozedur bzw. auch hinsichtlich der Anzahl der einzusetzenden Heizorgane auch in Abhängigkeit von der Qualität bzw. der Zusammensetzung des Kraftstoffs getroffen werden kann. Diese Qualität bzw. Zusammensetzung wird durch den Kraftstoffsensor 50 erfasst und in der Ansteuervorrichtung 44 unter Berücksichtigung von zuvor abgelegten Werten klassifiziert. Wird erkannt, dass die durch das Ausgangssignal des Sensors 50 repräsentierte Kraftstoffqualität durch zuvor vorgenommene und in der Ansteuervorrichtung 44 entsprechend abgespeicherte Klassifizierung als vergleichsweise leicht entflammbar oder/und verdampfbar gilt, kann die Startprozedur mit einer geringeren Anzahl an Heizorganen, also beispielsweise nur einem Zündelement 32 oder 34, mit oder ohne Heizeinrichtung 42 ablaufen. Da auch in diesem Zustand davon auszugehen ist, dass Probleme bei der Zündung nicht auftreten, kann auf die Anpassung sonstiger Startprozedurparameter, wie beispielsweise die Veränderung des zeitlichen Ablaufs, verzichtet werden. Selbstverständlich kann jedoch auch hier zum Erhöhen der Zündsicherheit eine oder mehrere der vorangehend beschriebenen Maßnahmen ergriffen werden, um die Startprozedur an die Tatsache, dass beispielsweise nur ein Zündorgan eingesetzt wird, anzupassen.

Selbstverständlich kann diese Unterscheidung im Ablauf der Startprozedur oder bei der Auswahl der einzusetzenden Heizorgane auch dahingehend getroffen werden, dass beispielsweise die elektrisch erregbare Heizeinrichtung 42 nicht erregt wird, jedoch beide Zündelemente 32, 34 erregt werden, wenn beispielsweise ausreichend hohe Temperaturen vorliegen oder erkannt wird, dass ein leicht entflammbarer bzw. auch leicht verdampfender Brennstoff eingesetzt wird.

Mit dem erfindungsgemäßen Verfahren wird es also möglich, bei einer Brennkammerbaugruppe, die eine Mehrzahl von elektrisch erregbaren Heizorganen, also beispielsweise mehrere Zündelemente und ggf. auch noch eine elektrisch erregbare Heizeinrichtung zur Unterstützung der Brennstoffabdampfung aufweist, durch geeignete Auswahl der Anzahl an in der Startphase zu erregenden Heizorganen bzw. auch durch einen angepassten Ablauf der Startprozedur auch unter ungünstigen Umständen, beispielsweise bei Defekt von einem der Heizorgane oder bei Spannungsunterversorgung, das Zünden sicherzustellen bzw. in der Startphase das Bordspannungssystem so wenig als möglich zu belasten.

## Patentansprüche

1. Verfahren zum Betreiben eines brennstoffbetriebenen Heizgeräts, insbesondere Fahrzeugheizgerät, in einer Startphase der Verbrennung, wobei das Heizgerät (10) eine Brennkammerbaugruppe (12) aufweist, in welche vermittels einer Verbrennungsluftzuführanordnung (18) Verbrennungsluft und vermittels einer Brennstoffzuführanordnung (22) Brennstoff eingeleitet werden, wobei die Brennkammerbaugruppe (12) wenigstens zwei elektrisch erregbare Heizorgane (32, 34, 42) aufweist, bei welchem Verfahren in der Startphase der Verbrennung dann, wenn eine geringere Anzahl an Heizorganen, vorzugsweise nur eines der Heizorgane, zur Erzeugung von Zündbedingungen zu nutzen ist, mit einer anderen Startprozedur gestartet wird, als dann, wenn eine größere Anzahl an Heizorganen zur Erzeugung von Zündbedingungen zu nutzen ist, **dadurch gekennzeichnet dass**
eine geringere Anzahl an Heizorganen zur Erzeugung von Zündbedingungen zu nutzen ist, wenn :
die Temperatur des Fahrzeugheizgeräts oder in der Umgebung des Fahrzeugheizgeräts unter einer vorbestimmten Grenztemperatur liegt.

2. Verfahren nach Anspruch 1,
**dadurch gekennzeichnet, dass** eine geringere Anzahl an Heizorganen zur Erzeugung von Zündbedingungen ferner dann zu nutzen ist, wenn:
A) weitere Zündorgane auf Grund eines Defekts nicht erregbar sind, oder/und
B) die verfügbare elektrische Spannung unter einer vorbestimmten Grenzspannung liegt,
oder/und
D) der in die Brennkammerbaugruppe eingespeiste Brennstoff einer Brennstoffktasse angehört, die als leicht entzündbar oder/und leicht verdampfend klassifiziert ist.

3. Verfahren nach Anspruch 1 oder 2,
**dadurch gekennzeichnet, dass** die Startprozedur bei Nutzung einer geringeren Anzahl an Heizorganen sich von einer Startprozedur bei Nutzung einer größeren Anzahl an Heizorganen **dadurch** unterscheidet, dass
a) wenigstens ein zu nutzendes Heizorgan mit höherer Heizleistung betrieben wird,
oder/und
b) die Erhöhung einer Verbrennungsluftzuführmenge über einen längeren Zeitraum gestreckt wird,
oder/und
c) die Erhöhung einer Brennstoffzuführmenge über einen längeren Zeitraum gestreckt wird,
oder/und
d) der Beginn der Brennstoffzufuhr bezogen auf den Beginn der Erregung des Heizorgans später erfolgt,
oder/und
e) das Verbrennungsluft/Brennstoff-Gemisch mit einem geringeren Verbrennungsluft/Brennstoff-Verhältnis bereitgestellt wird.

4. Verfahren nach einem der Ansprüche 1 bis 3,
**dadurch gekennzeichnet, dass** wenigstens eines der Heizorgane (32, 34, 42) ein Zündelement (32, 32), vorzugsweise Glühzündelement, ist.

5. Verfahren nach einem der Ansprüche 1 bis 4,
**dadurch gekennzeichnet, dass** wenigstens eines der Heizorgane (32, 34, 42) ein die Brennstoffabdampfung unterstützendes Heizelement (42), vorzugsweise an einem Bodenbereich (40) der Brennkammerbaugruppe (12), ist.

## Claims

1. A method for operating a fuel operated heating device, in particular a vehicle heating device, during a starting phase of combustion, the heating device (10) comprising a combustion chamber arrangement (12) into which combustion air may be inserted via a combustion air supply arrangement (18) and into which fuel may be fed via a fuel supply arrangement (22), said combustion chamber arrangement (12) comprising at least two electrically excitable heating members (32, 34, 42), wherein with said method during the starting phase of combustion, when only a small number of heating members, preferably only one of the heating members, is used for creating ignition conditions, another starting procedure will be used as when a larger number of heating members is used for creating ignition conditions, **characterized in that**
a smaller number of heating members for creating ignition conditions is to be used, if:
the temperature of said vehicle heating device or the temperature in the surroundings of said vehicle heating device fall below a predetermined limit temperature.

2. The method according to claim 1,
**characterized in that** furthermore a smaller number of heating members for creating ignition conditions is to be used, when:
A) other ignition members are not excitable because of defects or/and
B) the electric voltage available is below a predetermined limit voltage, or/and
D) the fuel fed into said combustion chamber arrangement is part of a group of fuels classified as easily flammable or/and easily evaporating.

3. The method according to claim 1 or 2,
**characterized in that** the starting procedure for the use of a smaller number of heating members is different from the starting procedure for the use of a larger number of heating members **in that**:
a) at least one heating member to be used is operated with a higher heating performance,
or/and
b) increasing a combustion air supply volume is extended over a longer period, or/and
c) increasing a fuel supply volume is extended over a longer period, or/and
d) fuel supply starts later in relation to the beginning of the excitation of said heating member,
or/and
e) the combustion air/fuel mixture is provided with a lower combustion air/fuel ratio.

4. The method according to one of claims 1 to 3,
**characterized in that** at least one of the heating members (32, 34, 42) is an ignition member (32, 32), preferably a glow ignition element.

5. The method according to one of claims 1 to 4,
**characterized in that** at least one of the heating members (32, 34, 42) is a heating element (42) supporting the fuel evaporation, preferably at a bottom area (40) of said combustion chamber arrangement (12).

## Revendications

1. Une méthode pour opérer un dispositif de chauffage utilisant un combustible, en particulier un dispositif de chauffage pour un véhicule, pendant une phase de démarrage de la combustion, le dispositif de chauffage (10) comprenant un arrangement de chambre de combustion (12), dans lequel l'air de combustion est introduite par un dispositif d'alimentation en air de combustion (18) et le combustible est introduit par un dispositif d'alimentation en combustible (22), l'arrangement de chambre de combustion (12) comprenant au moins deux éléments chauffants électriquement excitables (32, 34, 42), où avec cette méthode pendant la phase de démarrage de la combustion, quand un moindre nombre d'éléments chauffants, de préférence seulement un des éléments chauffants, peut être utilisé pour créer des conditions d'allumage, on démarre par une autre méthode de démarrage que lorsqu'un plus grand nombre d'éléments chauffants est utilisé pour créer des conditions d'allumage, **caractérisée en ce que**
un moindre nombre d'éléments chauffants est à utiliser pour créer des conditions d'allumage, si
la température du dispositif de chauffage pour un véhicule ou dans l'environnement du dispositif de chauffage pour un véhicule est inférieure à un seuil de température prédéfini.

2. La méthode selon la revendication 1,
**caractérisée en ce que**, en outre, un moindre nombre d'éléments chauffants est à utiliser pour créer des conditions d'allumage, si :
A) d'autres éléments d'allumage ne sont pas excitables à cause d'un défaut ou/et
B) la tension électrique disponible est inférieure à une tension limite prédéfinie,
ou/et
D) le combustible introduit dans l'arrangement de chambre de combustion appartient à une classe de combustibles classés comme facilement inflammables ou/et à évaporation facile.

3. La méthode selon la revendication 1 ou 2,
**caractérisée en ce que** la procédure de démarrage utilisant un moindre nombre d'éléments chauffants est différente de la procédure de démarrage utilisant un plus grand nombre d'éléments chauffants **en ce que**
a) au moins un élément chauffant à utiliser est opéré avec une performance de chauffage plus élevée,
ou/et
b) l'augmentation d'un volume d'air de combustion est étendue sur une période plus longue,
ou/et
c) l'augmentation d'un volume de combustible est étendue sur une période plus longue,
ou/et
d) l'alimentation en combustible en fonction du début de l'excitation de l'élément chauffant est démarrée plus tard,
ou/et
e) le mélange air de combustion/combustible est prévu avec un rapport air de combustion/combustible plus important.

4. La méthode selon la revendication 1 à 3,
**caractérisée en ce que** au moins un des éléments chauffants (32, 34, 42) est un élément d'allumage (32, 32), de préférence un élément d'allumage incandescent.

5. La méthode selon une des revendications 1 à 4,
**caractérisée en ce que** au moins un des éléments chauffants (32, 34, 42) est un élément chauffant soutenant l'évaporation de combustible (42), de préférence dans une région de fond (40) de l'arrangement de chambre de combustion (12).
